# EUROPÄISCHE PATENTANMELDUNG

(11) **EP 3 095 580 A1**
(43) Veröffentlichungstag der Anmeldung: **23.11.2016**
(21) Anmeldenummer: 16000423.0
(22) Anmeldetag: 22.02.2016
(51) Int. Cl.: B29C 47/60

(54) **SCHNECKE ZUM EINSATZ IN EINEM EXTRUDER SOWIE EXTRUDER**

(30) Priorität: 22.05.2015 DE 102015006479
(71) Anmelder: Reifenhäuser GmbH & Co. KG Maschinenfabrik, 53844 Troisdorf (DE)
(72) Erfinder: Meyer, Helmut, DE - 53842 Troisdorf (DE); Hennes, Jochen, DE - 53757 Sankt Augustin (DE)
(74) Vertreter: Farago, Peter Andreas

(57) **Zusammenfassung**

Die Erfindung betrifft eine Schnecke zum Einsatz in einem Extruder, insbesondere in einem Einschneckenextruder oder in einem Mehrschneckenextruder, sowie einen solchen Extruder.

Schnecken werden im Stand der Technik oft aus Segmenten aufgebaut, die auf einem Dorn getragen und axial miteinander verspannt werden. Um im Einsatz der Schnecke innerhalb des Extruderzylinders das Drehmoment auf die Segmente übertragen zu können, finden sich formschlüssige Verbindungen zwischen dem Dorn und den Segmenten.

Die hier vorliegende Erfindung schlägt stattdessen vor, ein zusätzliches Bauelement als Momentenbrücke direkt von Segment zu Segment einzusetzen, um den Dorn zu entlasten.

## Beschreibung

Die Erfindung betrifft eine Schnecke zum Einsatz in einem Extruder sowie einen Extruder mit einer solchen Schnecke.

Insbesondere betrifft die Erfindung eine Schnecke zum Einsatz in einem Doppelschneckenextruder sowie einen Doppelschneckenextruder.

Üblicherweise werden Schnecken modular aufgebaut. Sie können dadurch sehr flexibel an veränderte Aufgabenstellungen und Produkteigenschaften angepasst werden. Die modulare Bauweise einer Schnecke führt zu einem stabförmigen Kern, dem sogenannten Dorn, in der Praxis auch oft Welle oder Tragwelle genannt, und aus einzelnen Schneckenelementen, die auf den Dorn aufgeschoben werden. Die Elemente erfüllen die klassischen Funktionen der Schnecke im Extrusionsprozess wie beispielsweise das Fördern, Kneten, Mischen oder Scheren des ein- und durchzuführenden Kunststoffs.

Zum Übertragen des hohen auftretenden Drehmoments werden die Elemente mit dem Dorn formschlüssig verbunden und zusätzlich axial verspannt.

Die DE 10 2008 028 289 A1 offenbart eine Schnecke, bei welcher das Drehmoment von Segment zu Segment stirnseitig über eine Verzahnung übergeben wird.

Die DE 103 30 530 A1 beschreibt eine Welle, auf welcher eine Hülse aufgeschweißt wird. Segmente werden bis zum Anschlag aufgefädelt. Die DE 10 2011 112 148 A1, die DE 10 2004 042 846 B4 und die DE 196 21 571 C2 offenbaren jeweils spezielle Verzahnungen zwischen den Schneckensegmenten und dem Dorn.

Der Erfindung liegt die Aufgabe zugrunde, dem Stand der Technik eine Verbesserung oder eine Alternative zur Verfügung zu stellen.

Nach einem ersten Aspekt der vorliegenden Erfindung löst diese Aufgabe eine Schnecke zum Einsatz in einem Extruder, wobei die Schnecke einen Dorn und eine Mehrzahl auf dem Dorn getragene, axial zueinander angeordnete Segmente mit abgedichteten Segmentengrenzen aufweist, wobei jeweils zwischen einem ersten Segment und einem axial benachbarten zweiten Segment der Schnecke eine separate Momentenbrücke vorgesehen ist, welche über die Segmentengrenze hinweg ein Moment vom ersten zum zweiten Segment neben dem Dorn zu übertragen eingerichtet ist.

Begrifflich sei hierzu Folgendes erläutert:
Die "Segmente" sind diejenigen Bauelemente der Schnecke, welche zusammen den schneckenförmigen Gang bzw. die Mehrzahl an schneckenförmigen Gängen zum Plastifizieren des durch den Extruder zu führenden Kunststoffs in Zusammenwirkung mit dem Zylinder des Extruders bewirken.

Jeweils zwei axial benachbarte Segmente stoßen unmittelbar - im Falle von direkt benachbarten Segmenten - oder mittelbar - bei einem oder mehreren dazwischen liegenden Segmenten - an ihren Segmentengrenzen axial aneinander. Der sich dazwischen einstellende Schlitz, im einfachsten Fall also ein Kreisring, muss gegen den Durchtritt von Kunststoffschmelze nach innen, somit zum Dorn hin, abgedichtet werden. Die Segmente werden dazu üblicherweise axial verspannt. Die negative Normalkraft führt zu einer ausreichenden Abdichtung mittels Flächenpressung.

Die "Momentenbrücke" muss sowohl mit dem ersten Segment als auch mit dem zweiten Segment zusammenwirken. Bei Beaufschlagung der Schnecke mit einem Moment, konkret an einem Segment, überträgt das erste Segment das Moment zumindest im überwiegenden Teil auf die Momentenbrücke. Die Momentenbrücke gibt das Moment sodann an das axial benachbarte zweite Segment weiter.

Die Momentenbrücke selbst ist dabei weder mit dem ersten noch mit dem zweiten Segment einstückig ausgeführt, sondern ein separates Element der zusammengesetzten Schnecke.

Am Übergang von einem ersten Segment zu einem zweiten Segment kann die Momentenbrücke aus mehreren Einzelteilen bestehen, oder aus nur einem Teil bestehen.

Generell sei ausdrücklich darauf hingewiesen, dass im Rahmen der hier vorliegenden Patentanmeldung unbestimmte Artikel und Zahlenangaben wie ein, zwei usw. regelmäßig als Mindestens-Angaben zu verstehen sein sollen, also als "mindestens ein...", "mindestens zwei..." usw., sofern sich nicht aus dem jeweiligen Kontext ausdrücklich oder implizit ergibt oder es für den Fachmann offensichtlich ist, dass dort nur "genau ein...", "genau zwei..." usw. gemeint sein kann oder soll.

Die hier erfindungsrelevante Schnecke sollte jedoch eine Mehrzahl von jeweils benachbarten Segmenten mit einer Momentenbrücke aufweisen. Mit anderen Worten sollen mehrere Segmentengrenzen zwischen jeweils zwei axial benachbarten Segmenten mit einer Momentenbrücke überbrückt werden. Dabei kann eine Brücke auch bei einer Mehrzahl von zu überbrückenden Segmentengrenzen das Moment von Segment zu Segment übertragen. Eine bevorzugte Ausführungsform jedoch sieht vor, dass die Momentenbrücken jeweils nur das Moment eines Segmentengrenzenübergangs übertragen.

Die Momentenübertragung "neben dem Dorn" ist so zu verstehen, dass die Momentenübertragung unabhängig vom Dorn erfolgt, zumindest zum deutlich überwiegenden Teil, insbesondere zu mindestens 90 %. Angesichts der Schwerkraft, mit welcher jedes Segment ohnehin auf dem Dorn lastet, was zu einer Reibung führt, ist bevorzugt die Momentenübertragung soweit wie möglich vom Dorn genommen und auf die Segmente und die Momentenbrücken übertragen.

Die Übertragung "neben" dem Dorn heißt nicht zwingend, wohl aber bevorzugt, dass die Momentenübertragung radial außerhalb des Dorns erfolgt.

Vorteilhaft erreicht der vorgestellte Aspekt der Erfindung eine Drehmomentübertragung beim Einsatz von Schneckensegmenten im Bereich der Extruder, also der Einschneckenextruder und Doppelschneckenextruder, wobei die im Stand der Technik bekannten teils sehr hohen Beanspruchungen des Dorns, bestehend aus Torsion, Zug, Druck und Biegung, gemindert werden. Die Gefahr des mechanischen Versagens des Dorns wird daher ganz erheblich reduziert. Zudem können für den Dorn kostengünstigere im Idealfall glattzylindrische Wellen eingesetzt werden, was überdies die Beschaffbarkeit der Wellen erhöht.

Die Momentenbrücke kann einen anderen Werkstoff aufweisen als die Segmente.

So ist es beispielsweise denkbar, die Momentenbrücken auf eine andere Belastung auszulegen als die Segmente. Die Momentenbrücken werden in einem theoretischen Fall fast nur durch Scherung beansprucht, so dass oft mechanisch bessere Werkstoffe eingesetzt werden können als für die vielfältig beanspruchten Flanken der Gänge an den Segmenten.

Die Momentenbrücke kann außerdem einen anderen Werkstoff aufweisen als der Dorn.

Auch diesbezüglich kann bei der Konstruktion der Schnecke den konkret zu erwartenden Belastungen besser Rechnung getragen werden. Der Dorn hätte bei idealer Konstruktion im Wesentlichen die axiale Zugkraft zu tragen, welche sich beim Verspannen der Segmente zum Abdichten der Segmentengrenzen einstellt. Darüber hinaus wird der Dorn im Normalfall noch das Biegemoment aus dem Eigengewicht der Segmente und aus einem eigenen Eigengewicht zu tragen haben, sobald die Extruderrichtung von der Vertikalen abweicht. Die Eigengewichtseffekte sind gegenüber der Verspannkraft im Normalfall jedoch als gering zu erwarten.

Wenn die Momentenbrücke radial außerhalb des Dorns angeordnet ist, dann kann der Dorn geometrisch einfach gestaltet werden.

Im Idealfall weist der Dorn innerhalb der Segmente einen kreisrunden Querschnitt auf. Der Kerbfaktor β beträgt im Idealfall 1. Je kreisrunder und glatter der Dorn in seinem Querschnitt ist, umso größer ist der Anteil des Drehmoments, welches sich infolge von Formschluss von Segment über Momentenbrücke zu benachbartem Segment und somit neben dem Dorn her überträgt.

Dies unterstützt die angestrebte Trennung der mechanischen Beanspruchungen, gemäß welcher die Schneckensegmente selbst die Aufgabe übernehmen, die Torsionsspannung mittels der Momentenbrücken zu übertragen.

Die Momentenbrücke weist - bevorzugt ebenfalls - zum Dorn hin bevorzugt eine kreisrunde Aussparung auf, so dass auch zwischen der Momentenbrücke und dem Dorn eine möglichst geringe Mitnehmerwirkung erzeugt wird, mithin eine möglichst geringe Momentenübertragung erfolgt.

Die Momentenbrücke muss in mindestens zwei Segmente eingreifen.

Die beiden von der Momentenbrücke verbundenen Segmente sind im konstruktiv einfachsten Falle die axial direkt benachbarten Segmente der Schnecke. Es lassen sich jedoch auch Alternativen vorstellen, bei welchen eine Momentenbrücke auch oder nur das Moment von einem ersten Segment zu einem dritten oder noch weiter entfernten Segment überträgt, beispielsweise mit Durchführungen für jeweils eine Momentenbrücke oder Teile einer Momentenbrücke durch ein Segment.

Konstruktiv wird vorgeschlagen, dass die Momentenbrücke die Gestalt einer Hülse aufweist, mit einer axialen Erstreckung und einer radialen Materialdicke, wobei die axiale Erstreckung um ein vielfaches größer ist als die radiale Materialdicke.

Insbesondere sei an Proportionen gedacht, bei welchen die axiale Erstreckung mindestens das Fünffache, bevorzugt das Zehnfache, der radialen Materialdicke beträgt, also der einfachen Wanddicke der Hülse. Sowohl die axiale Erstreckung als auch die radiale Materialdicke seien dabei als arithmetischer Mittelwert über den Umfang ermittelt.

Eine Hülse lässt sich auf einen zylindrischen Dorn leicht aufschieben und ermöglicht es zusätzlich, leicht in ein erstes Segment eingeschoben zu werden bzw. ein zweites Segment leicht aufschieben zu lassen, so dass sich zwischen dem ersten Segment, der Momentenbrücke und der Momentenbrücke und dem zweiten Segment jeweils ein Formschluss ergibt, spätestens bei Aufbringen eines Tordierens.

Um die Gänge der Schnecke möglichst präzise zu halten, seien die Segmente bevorzugt von der Momentenbrücke in tangentialer Hinsicht fixiert.

Um einen Formschluss zwischen der Momentenbrücke und den Segmenten herstellen zu können, ist es sowohl denkbar, dass die Momentenbrücke eine axiale Verzahnung aufweist, als auch, dass die Momentenbrücke eine radiale Verzahnung aufweist.

Um eine axiale Pressung der Momentenbrücke zu vermeiden und um eine möglichst saubere Trennung der verschiedenen mechanischen Belastungen zu erreichen, ist denkbar, dass die Momentenbrücke einen axialen Spielraum zwischen den Segmenten aufweist.

Es kann beispielsweise eine Passfeder eingesetzt werden, die in Torsionsrichtung als Mitnehmer zwischen der Momentenbrücke und einem aufgeschobenen Segment wirkt, wobei der axiale Spielraum dafür sorgt, dass die gesamte axiale Vorspannung ausschließlich auf die Fugen zwischen den Segmenten wirkt, nicht aber auf die Passfedern oder die anderen Mitnehmer.

Die Momentenbrücke weist bevorzugt gegenüber dem Dorn in axialer Hinsicht einen Schiebesitz auf, ebenso wie die Segmente gegenüber dem Dorn axial bevorzugt einen Schiebesitz aufweisen und/oder die Segmente axial einen Schiebesitz gegenüber der Momentenbrücke aufweisen. Tangential sollte die Momentenbrücke gegenüber dem Dorn fixiert sein, also nicht nur einen Schiebesitz aufweisen; jedenfalls aber sollte die Momentenbrücke gegenüber den Segmenten ohne Schlupf fixiert sein.

Ein "Schiebesitz" ist eine Passung, welche einen festen Sitz beschreibt, bei dem sich die Teile aber nicht verkeilen. Eine Erläuterung zum Schiebesitz findet sich beispielsweise in Lueger, Otto: Lexikon der gesamten Technik und ihrer Hilfswissenschaften, Band 7 Stuttgart, Leipzig 1909, Seite 47.

Der "Dorn" sei in axialer Erstreckung verstanden jedenfalls vom Ende des ersten Segments bis zum Beginn des letzten Segments. Das Eintragen des Moments in die Schnecke ist sowohl über den Dorn möglich - dann ist eine tangentiale Fixierung zwischen dem Getriebeabtrieb und dem Dorn erforderlich - , als auch über eine momentenübertragende Verbindung des Getriebeabtriebs mit mindestens einem Segment, bevorzugt mit dem axial ersten Segment.

Um die Montage zu erleichtern, kann die Momentenbrücke an einem Segment zerstörungsfrei lösbar angebracht sein. So ist beispielsweise denkbar, dass die Momentenbrücke Klemmsitz oder Schiebesitz innen an einem Segment angebracht ist. Bei der Montage der Schnecke muss dann nur das Segment mit der bereits angebrachten Momentenbrücke auf den Dorn aufgefädelt werden. Werden mehrere solcher Segmente, die jeweils an derselben Seite eine Momentenbrücke bereits angebracht haben, in Reihe aufgefädelt, setzt sich die Schnecke automatisch zusammen.

Alternativ kann die Momentenbrücke separat von den zwei Segmenten sein, die sie verbindet.

Die Erfindung sei jedenfalls dann als verwirklicht angesehen, wenn die Segmente, der Dorn und die Momentenbrücke zueinander so abgestimmt sind, dass sich mindestens 70 % eines Moments, insbesondere mindestens 80 %, von Segment/-en zu Segment/-en überträgt, und zwar mittels Momentenbrücke/-n, mithin maximal 30 % über den Dorn übertragen werden, insbesondere maximal 20 %.

In Prototypenversuchen der Erfinder und in ihren Modellrechnungen haben sich freilich deutlich geringere Übertragungsquoten für den Dorn ergeben.

Insbesondere ist schon dadurch, wenn die Segmente frei drehbar um den Dorn gestaltet sind, sichergestellt, dass sich von dort nur infolge Reibung und Eigengewicht Momente zum Dorn übertragen.

Es versteht sich, dass sich die Vorteile einer Schnecke wie vorstehend beschrieben unmittelbar auf einen Extruder erstrecken, insbesondere auf einen Einschneckenextruder oder einen Doppelschneckenextruder, der eine Schnecke wie vorstehend beschrieben aufweist.

Die Erfindung wird nachstehend anhand verschiedener Ausführungsbeispiele unter Bezugnahme auf die Zeichnung näher erläutert. Dort zeigen
- Fig. 1: vereinfacht in einem Längsschnitt eine erste Ausführungsform einer Schnecke mit Segmenten und Momentenbrücken in Form von Mitnehmerscheiben an einem Dorn,
- Fig. 2: die Schnecke aus Fig. 1 gemäß dortiger Kennzeichnung II-II,
- Fig. 3: eine zweite Ausführungsform einer erfindungsgemäßen Schnecke in analoger Darstellung zu Fig. 1,
- Fig. 4: die Schnecke aus Fig. 3 in einem Querschnitt gemäß dortiger Kennzeichnung IV-IV,
- Fig. 5: einen in den Fig. 3 und 4 innerhalb der Schnecke dargestellten Kupplungsring in einer Draufsicht,
- Fig. 6: in einer dritten Ausführungsform der Erfindung eine Schnecke mit einer Hülse mit Außenverzahnung als Momentenbrücke,
- Fig. 7: die Schnecke aus Fig. 6 in einem Querschnitt gemäß dortiger Kennzeichnung VII-VII,
- Fig. 8: in einer vierten Ausführungsform der Erfindung eine Schnecke mit einer Gabelhülse als Momentenbrücke,
- Fig. 9: die Gabelhülse aus Fig. 8 in alleiniger Darstellung,

- Fig. 10: in einer fünften Ausführungsform der Erfindung eine Schnecke mit einem Zahnring mit Bogenzähnen als Momentenbrücke,
- Fig. 11: in einem schematischen Längsschnitt eine sechste Ausführungsform einer erfindungsgemäßen Schnecke mit durchlaufenden Leisten als Momentenbrücke,
- Fig. 12: die Schnecke aus Figur 11 schematisch in einem Querschnitt gemäß Kennzeichnung XII-XII in Figur 11 sowie
- Fig. 13: schematisch in perspektivischer Ansicht eine Leiste wie in den Figuren 11 und 12 verwendet.

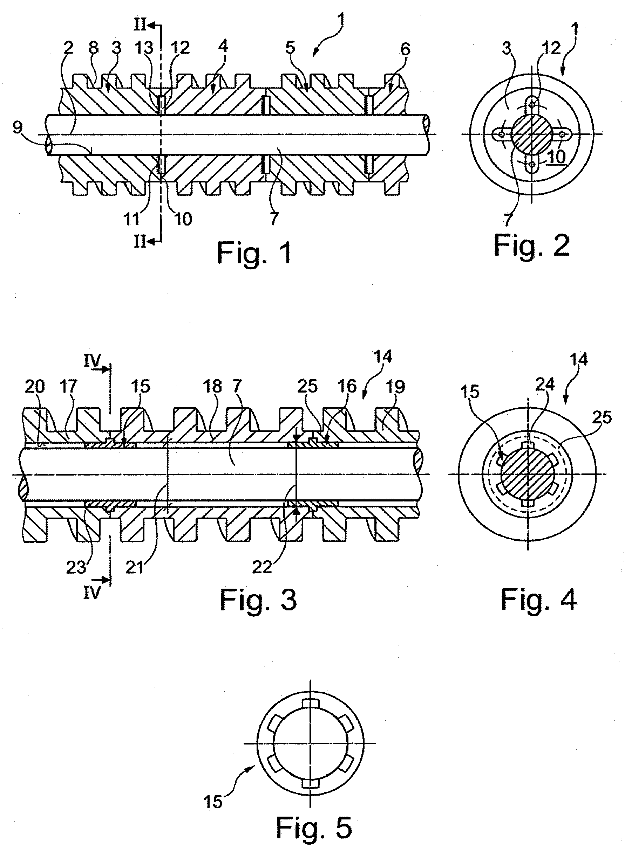

Die Schnecke 1 in den Fig. 1 und 2 besteht im in den Figuren sichtbaren Abschnitt aus entlang einer Längserstreckung 2 axial aneinanderliegenden und gegeneinander vorgespannten Schneckensegmenten, nämlich einem ersten Segment 3, einem zweiten Segment 4, einem dritten Segment 5 und einem vierten Segment 6. Die Schneckensegmente sind auf den Dorn 7 entlang der Längserstreckung 2 auffädelnd gegeneinander geschoben.

Jedes Schneckensegment verfügt radial außen über Schneckenkanalgänge 8 (exemplarisch beziffert) und radial innen über einen Innenzylinder, so beispielsweise das erste Segment 3 über einen ersten Innenzylinder 9.

An einer axialen Stirnseite 10 verfügen die Schneckensegmente außerdem über jeweils genau vier scheibenförmige Ausnehmungen 11 (exemplarisch beziffert).

Die scheibenförmigen Ausnehmungen 11 jeweils zweier benachbart liegender Schneckensegmente, so beispielsweise des ersten Segments 3 und des zweiten Segments 4, sind deckungsgleich voreinander im Anschlag. In diesen befinden sich vier fingerartige Scheiben 12 (exemplarisch beziffert). Die fingerartigen Scheiben 12 weisen eine axiale Erstreckung auf, welche eine axiale Tiefe der scheibenförmigen Ausnehmungen 11 deutlich überschreitet, jedoch um weniger als 100% überschreitet. Dadurch kommen die axialen Stirnseiten 10 zweier jeweils benachbart liegender Schneckensegmente unter Vorspannung sicher aneinander zum Liegen und dichten somit die resultierende Schnecke 1 gegen Kunststoffströmungen von außen nach innen zum Dorn 7 hin ab; gleichzeitig jedoch sind die fingerartigen Scheiben 12 in Ausnehmungen geführt, die jeweils ein axiales Maß zweier scheibenförmiger Ausnehmungen 11 aufweisen. Sie liegen dort mit einem axialen Spiel 13, das weniger als die axiale Tiefe der scheibenförmigen Ausnehmungen 11 beträgt, und weniger als eine axiale Erstreckung der fingerartigen Scheiben 12.

In tangentialer Hinsicht liegen die fingerartigen Scheiben 12 in den scheibenförmigen Ausnehmungen 11 in einem Schiebesitz an, so dass tangential kein Spiel zwischen den Segmenten und den fingerartigen Scheiben 12 vorherrscht, also beispielsweise das erste Segment 3 formschlüssig hinsichtlich einer Rotationsbewegung mit den fingerartigen Scheiben 12 verbunden ist, die fingerartigen Scheiben 12 hingegen formschlüssig mit dem zweiten Segment 4 verbunden sind, woraus sich eine Rotationsbewegung des ersten Segments 3 auf das axial benachbart liegende zweite Segment 4 ohne Spiel überträgt.

Im Betrieb der Schnecke 1 dienen die vier fingerartigen Scheiben 12 zwischen dem ersten Segment 3 und dem zweiten Segment 4 als Momentenbrücke.

Die Momentenbrücke ist das hier vorgeschlagene, neue Konstruktionselement, welches mit mindestens zwei Schneckensegmenten verbunden ist und die Aufgabe übernimmt, das anfallende Drehmoment des einen Segments auf das nachfolgende zu übertragen. Das Drehmoment wird also nicht mehr - wie aus dem Stand der Technik bekannt - mittels des Dorns 7 übertragen. Der Dorn 7 bleibt deshalb drehmomentverschont; in der Festigkeitslehre würde man hier von einer Spannungstrennung von Torsions- und Normalspannung reden. Der neuartige Schneckendorn wird dadurch im Durchmesser kleiner und kann außen komplett glatt gestaltet werden. Dies erhöht die zulässige Spannung im Bereich des Dorns 7. Außerdem kann das Grundmaterial des neuen Konstruktionselements, also der Momentenbrücke, von demjenigen des Dorns abweichen. So kann das jeweilige Material auf die vorliegenden Aufgaben besser angepasst werden: Das Material des neuen Konstruktionselements, nämlich der Momentenbrücke, kann hauptsächlich auf den Lastfall der Scherung ausgelegt werden, das Material des Dorns hingegen auf die Biegewechselbeanspruchung und die axialen Kräfte.

Bereits eine der fingerartigen Scheiben 12 würde als Mitnehmer dienen können. Durch Verwendung einer Vielzahl von separaten Teilen, hier konkret vier fingerartiger Scheiben 12, zur Funktion als ein Mitnehmer zwischen zwei axial benachbarten Segmenten und somit als Momentenbrücke im Sinne der hier vorliegenden Patentanmeldung, führt jedoch zu einer Lastenverteilung und außerdem zu einer Schnecke, die ihren Eigengewichtsschwerpunkt in der Längsachse hat. Es treten dann auch beim Drehen der Schnecke keine außenmittigen Fliehkräfte oder auch keine außenmittig wirkenden Gewichtsbelastungen auf.

In der zweiten Ausführungsform der Erfindung für eine axial segmentierte Schnecke 14 in den Fig. 3 und 4 sind ein erster Kupplungsring 15 (vgl. vor allem auch Fig. 4 und 5) sowie ein zweiter Kupplungsring 16 als Momentenbrücken eingesetzt. Jeder Kupplungsring 15, 16 ist innen zylindrisch und gleitet dadurch ohne nennenswerte Drehmomentenübertragung auf dem Dorn 7 (funktionsgleiche oder sogar identische Elemente tragen über die Figuren hinweg mitunter identische Bezugsziffern). Dadurch kann auch hier der Dorn 7 weitgehend frei von der Übertragung von Drehmomenten auch im Betrieb der Schnecke 14 rein auf Zugkraft belastet sein, die er dadurch annimmt, dass die Schneckensegmente axial zum Dichten und zum Fixieren der Gänge verpresst sind.

Die Schneckensegmente, hier beispielsweise also ein erstes Segment 17, ein zweites Segment 18 und ein drittes Segment 19, sind zu ihrer Innenseite 20 hin ebenfalls zylindrisch ausgestattet, allerdings mit einem Innendurchmesser 21, welcher einem Außendurchmesser 22 der Kupplungsringe 15, 16 in deren beidseitigen hülsenartigen Bereichen entspricht. Die Segmente 17, 18, 19 der Schnecke 14 lassen sich daher - bevorzugt in einem Schiebesitz - auf die hülsenförmigen Abschnitte 23 (exemplarisch gekennzeichnet) aufschieben. Eine Momentenmitnahme zwischen den Kupplungsringen 15, 16 und den Segmenten 17, 18, 19 erfolgt durch radiale Vorsprünge 24, die in entsprechende radiale Ausnehmungen 25 (exemplarisch beziffert) an den Segmenten 17, 18, 19 eingreifen.

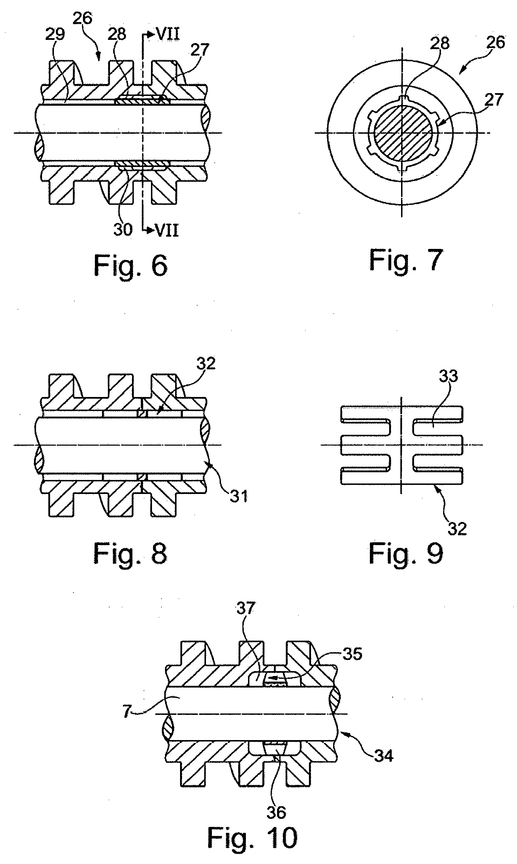

Als Momentenbrücke sind auch verschiedenste andere Ausführungsformen denkbar, so beispielsweise in der dritten Ausführungsform einer Schnecke 26 in Fig. 6 und 7 über eine Hülse 27 mit einer Außenverzahnung 28, auch hier dargestellt an einer Ausführungsform mit einem Ringschlitz 29 zwischen den Segmenten und dem Dorn, aber weiter mit einem zweiten Ringschlitz 30, um ein axiales Spiel zwischen der Außenverzahnung 28 und Materialflanken in den Segmenten zu belassen und dadurch keine Normalkräfte in die Außenverzahnung 28 einfließen zu lassen.

In der vierten Ausführungsform einer Schnecke 31 in Fig. 8 ist eine Gabelhülse 32 (vgl. Fig. 8 und 9) als Momentenbrücke eingesetzt. Die Gabelhülse 32 entspricht im Wesentlichen zwei rückwärtig aneinandergesetzten Naben mit durchgehenden und geräumten Nuten 33 (exemplarisch beziffert), bevorzugt jedoch einstückig ausgeführt, so dass sich Passfedern, die an den Segmenten angeformt oder an diesen angebracht sein können, in die Nuten 33 einschieben lassen und wiederum in tangentialer Hinsicht bevorzugt keinerlei Spiel besteht, somit eine sofortige Mitnehmereigenschaft für Torsionskräfte hervorgerufen wird, wohingegen in axialer Richtung ein Spiel belassen werden sollte.

In der fünften Ausführungsform einer Schnecke 34 (vgl. Fig. 10) ist als Momentenbrücke ein Zahnring 35 vorgesehen, der eine Vielzahl Bogenzähne 36 (exemplarisch beziffert) aufweist und längsverschieblich auf dem Dorn 7 angeordnet ist, wobei wiederum ein offener Ringschlitz 37 zwischen den axial aneinandergepressten Segmenten besteht, dessen axiale Längserstreckung größer ist als die axiale Längserstreckung des Zahnrings 35, so dass keine Axialkräfte von den Segmenten in die Bogenzähne 36 eingebracht werden, wohl aber ein tangentialer Eingriff möglichst ohne Spiel zwischen den Bogenzähnen 36 und den benachbarten Segmenten vorliegt.

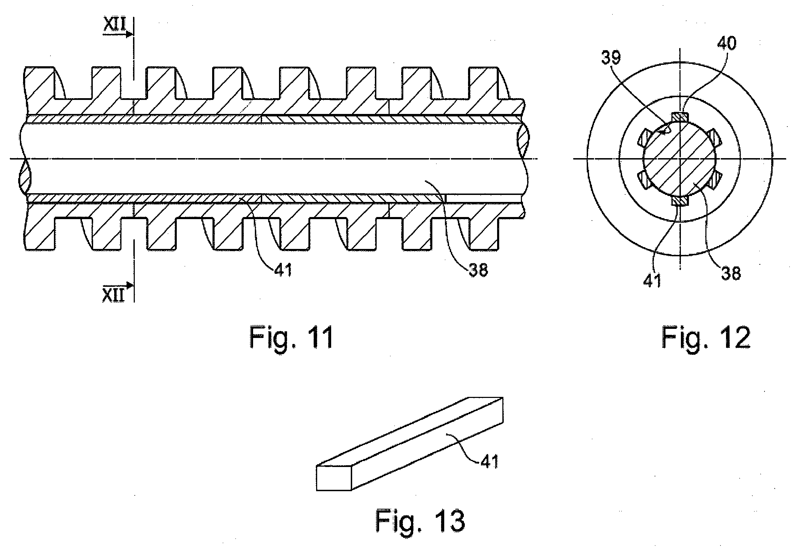

Die Schnecke in der sechsten Ausführungsform der Erfindung (Figuren 11 und 12) weist wiederum eine Vielzahl Segmente (in Figur 11 sind drei Segmente dargestellt) auf, die auf einem Dorn 38 angeordnet sind. Der Dorn 38 hat einen kreisrunden Querschnitt, auf dessen Außenumfang ein kreisrunder Innenumfang 39 der Segmente im Schiebesitz passt.

Die Segmente haben am Innenumfang 39 gleichmäßig beabstandete Mitnehmernuten 40 (exemplarisch beziffert). Diese haben einen rechteckigen Querschnitt.

Die Mitnehmernuten 40 der Segmente sind zueinander fluchtend angeordnet. Durch die fluchtenden Mitnehmernuten 40 sind Mitnehmerleisten 41 (exemplarisch beziffert, vgl. auch Fig. 13) eingeschoben. Entsprechende Leisten können axial geteilt sein, oder sie können sich über die gesamte Länge der Segmente erstrecken. Die Mitnehmerleisten 41 sind aus einem Werkstoff mit hoher Scherfestigkeit gefertigt, beispielsweise Federstahl, um der fast reinen Scherbeanspruchung ideal gewachsen zu sein.

Generell sei als mögliche Ausgestaltung erwähnt, mehrere Passfedern zu verwenden, die über den Umfang verteilt sind und gegebenenfalls zusätzlich durch einen Ring verbunden sind. Die Passfedern können auch unterschiedliche axiale Längen aufweisen und/oder axial versetzt zueinander angeordnet sein. Eine andere Ausgestaltung sieht mehrere Buchsen vor, die auf den Dorn aufgeschoben werden. Hierbei können auf den Außenseiten der Buchsen beispielsweise Nuten vorgesehen sein, die mit zusätzlichen Passfedern mindestens zwei Segmente verbinden. Die Buchsen können aber auch Federn aufweisen, wodurch zusätzliche Passfedern überflüssig werden. Auch hierbei werden mindestens zwei Segmente miteinander verbunden.

In allen denkbaren Ausführungen können die Federn oder Nuten sowohl schmal sein als auch alternativ eine große Breite aufweisen. Für eine große Breite spricht, dass die Anzahl gering gehalten werden kann und die Funktion der Übertragung der Torsion gewährleistet ist.

Bevorzugt sind daher bei einer Ausführung der hier vorgestellten Erfindung maximal zehn, bevorzugt maximal acht, sechs, vier oder zwei Mitnehmerflanken von einem Segment zur Momentenbrücke und ebenso viele, bevorzugt identisch viele, auf dem weiteren Weg von der Momentenbrücke zum benachbarten Segment vorgesehen.

Mit einfachen Worten findet sich die Erfindung dann wieder, wenn ein zusätzliches Konstruktionselement zwischen Segment und Dorn vorgesehen ist, welches mindestens in zwei Segmente eingreift, wobei die Segmente radial das zusätzliche Konstruktionselement überdecken und wobei mindestens 70 %, insbesondere mindestens 80 % oder 90 %, des Drehmoments von Segment/-en zu Segment/-en über das/die zusätzliche/n Konstruktionselement/-e übertragen werden, mithin höchstens 30 %, insbesondere höchstens 20 % oder 10 %, über den Dorn übertragen werden.

Generell sei darauf hingewiesen, dass das Einbringen des Moments in die Schnecke am leichtesten beim aus Sicht des Getriebeabtriebs ersten Segment erfolgt. Dort ist das abzutragende Moment am größten, weil noch der größte Massenanteil des Förderguts granulatförmig vorliegt. Je weiter das Fördergut durch den Extruder fortschreitet, desto größer wird der Anteil des bereits aufgeschmolzenen Granulats, was zu einer Reduzierung des Widerstands des Förderguts gegen die Schneckendrehung und somit auch zu einer Reduzierung des erforderlichen abzutragenden Moments führt.

### Liste der verwendeten Bezugszeichen

- 1: Schnecke
- 2: Längserstreckung
- 3: erstes Segment
- 4: zweites Segment
- 5: drittes Segment
- 6: viertes Segment
- 7: Dorn
- 8: Schneckenkanalgang
- 9: erster Innenzylinder
- 10: axiale Stirnseite
- 11: scheibenförmige Ausnehmung
- 12: fingerartige Scheibe
- 13: axiales Spiel
- 14: Schnecke
- 15: erster Kupplungsring
- 16: zweiter Kupplungsring
- 17: erstes Segment
- 18: zweites Segment
- 19: drittes Segment
- 20: Innenseite
- 21: Innendurchmesser
- 22: Außendurchmesser
- 23: hülsenförmiger Abschnitt
- 24: radialer Vorsprung
- 25: radiale Ausnehmung
- 26: Schnecke
- 27: Hülse
- 28: Außenverzahnung
- 29: Ringschlitz
- 30: zweiter Ringschlitz
- 31: Schnecke
- 32: Gabelhülse
- 33: Nut
- 34: Schnecke
- 35: Zahnring
- 36: Bogenzahn
- 37: Ringschlitz
- 38: kreisrunder Dorn
- 39: Innenumfang
- 40: Mitnehmernut
- 41: Mitnehmerleiste

## Patentansprüche

1. Schnecke zum Einsatz in einem Extruder, wobei die Schnecke einen Dorn und eine Mehrzahl auf dem Dorn getragene, axial zueinander angeordnete Segmente mit abgedichteten Segmentengrenzen aufweist, ***dadurch gekennzeichnet, dass*** jeweils zwischen einem ersten Segment und einem axial benachbarten zweiten Segment eine separate Momentenbrücke vorgesehen ist, welche über die Segmentengrenze hinweg ein Moment vom ersten zum zweiten Segment neben dem Dorn zu übertragen eingerichtet ist.

2. Schnecke zum Einsatz in einem Extruder, wobei die Schnecke einen Dorn und eine Mehrzahl auf dem Dorn getragene, axial zueinander angeordnete Segmente mit abgedichteten Segmentengrenzen aufweist, wobei die Segmente radial außen einen Schneckengang formen, wobei die Schnecke in axialer Anordnung ein erstes Segment und darauf folgend weitere Segmente bis zu einem letzten Segment aufweist, wobei sich der Dorn vom ersten bis zum letzten Segment erstreckt, ***insbesondere*** Schnecke nach Anspruch 1, ***dadurch gekennzeichnet, dass*** der Dorn gegenüber einem Segment kreisrund im Querschnitt ist, insbesondere gegenüber allen Segmenten.

3. Schnecke nach Anspruch 1 oder 2, ***dadurch gekennzeichnet, dass*** die Momentenbrücke einen anderen Werkstoff aufweist als die Segmente, insbesondere Federstahl.

4. Schnecke nach einem der vorstehenden Ansprüche, ***dadurch gekennzeichnet, dass*** die Momentenbrücke einen anderen Werkstoff aufweist als der Dorn.

5. Schnecke nach einem der vorstehenden Ansprüche, ***dadurch gekennzeichnet, dass*** die Momentenbrücke radial außerhalb des Dorns angeordnet ist.

6. Schnecke nach einem der vorstehenden Ansprüche, ***dadurch gekennzeichnet, dass*** die Momentenbrücke radial innerhalb der Segmente angeordnet ist.

7. Schnecke nach einem der vorstehenden Ansprüche, ***dadurch gekennzeichnet, dass*** der Dorn innerhalb der Segmente einen kreisrunden Querschnitt aufweist.

8. Schnecke nach einem der vorstehenden Ansprüche, ***dadurch gekennzeichnet, dass*** die Segmente zum Dorn hin eine kreisrunde Aussparung aufweisen, wobei sie zur Momentenbrücke hin eine von einer kreisrunden Aussparung abweichende Mitnehmernut aufweisen.

9. Schnecke nach Anspruch 8, ***dadurch gekennzeichnet, dass*** die Momentenbrücke die Form einer Leiste hat und durch eine Mehrzahl Segmente hindurch verläuft, wobei die Leiste an mehreren Segmenten, insbesondere an der Mehrzahl Segmente, durch jeweils eine Mitnehmernut frei von tangentialem Spiel verläuft.

10. Schnecke nach Anspruch 9, ***dadurch gekennzeichnet, dass*** die Leiste entlang ihrer Länge am Dorn anliegt, wobei die Mitnehmernuten der Segmente zum Dorn hin geöffnet sind.

11. Schnecke nach einem der vorstehenden Ansprüche, ***dadurch gekennzeichnet, dass*** die Momentenbrücke zum Dorn hin eine kreisrunde Aussparung aufweist.

12. Schnecke nach einem der vorstehenden Ansprüche, ***dadurch gekennzeichnet, dass*** der Dorn im Querschnitt kreisrund ist, insbesondere über seine gesamte Längserstreckung axial innerhalb der Segmente.

13. Schnecke nach einem der vorstehenden Ansprüche, ***dadurch gekennzeichnet, dass*** die Momentenbrücke in zwei oder mehr Segmente eingreift.

14. Schnecke nach einem der vorstehenden Ansprüche, ***dadurch gekennzeichnet, dass*** die Momentenbrücke die Gestalt einer Hülse aufweist, mit einer axialen Erstreckung und einer radialen Materialdicke, wobei die axiale Erstreckung um ein Vielfaches größer ist als die radiale Materialdicke.

15. Schnecke nach einem der vorstehenden Ansprüche, ***dadurch gekennzeichnet, dass*** die Momentenbrücke eine axiale Verzahnung aufweist.

16. Schnecke nach einem der vorstehenden Ansprüche, ***dadurch gekennzeichnet, dass*** die Momentenbrücke eine radiale angeordnete, somit tangential wirkende, Verzahnung aufweist.

17. Schnecke nach einem der vorstehenden Ansprüche, ***dadurch gekennzeichnet, dass*** die Momentenbrücke einen axialen Spielraum zwischen den Segmenten aufweist.

18. Schnecke nach einem der vorstehenden Ansprüche, ***dadurch gekennzeichnet, dass*** die Momentenbrücke einen Schiebesitz gegenüber dem Dorn aufweist.

19. Schnecke nach einem der vorstehenden Ansprüche, ***dadurch gekennzeichnet, dass*** die Segmente einen Schiebesitz gegenüber dem Dorn aufweisen.

20. Schnecke nach einem der vorstehenden Ansprüche, ***dadurch gekennzeichnet, dass*** die Segmente einen Schiebesitz gegenüber der Momentenbrücke aufweisen.

21. Schnecke nach einem der vorstehenden Ansprüche, ***dadurch gekennzeichnet, dass*** die Momentenbrücke an einem Segment zerstörungsfrei lösbar angebracht ist.

22. Schnecke nach einem der Ansprüche 1 bis 18, ***dadurch gekennzeichnet, dass*** die Momentenbrücke separat von den zwei Segmenten ist.

23. Schnecke nach einem der vorstehenden Ansprüche, ***dadurch gekennzeichnet, dass*** die Segmente, der Dorn und die Momentenbrücke zum Übertragen von mindestens 70 %, insbesondere 80 % oder 90 %, eines Moments von Segment zu Segment mittels der Momentenbrücke eingerichtet sind.

24. Schnecke nach einem der vorstehenden Ansprüche, ***Dadurch gekennzeichnet, dass*** die Segmente, mindestens ein Segment, insbesondere alle bis auf eines, frei drehbar um den Dorn gestaltet sind.

25. Extruder mit einer Schnecke nach einem der vorstehenden Ansprüche.
